# EUROPÄISCHE PATENTANMELDUNG

(11) **EP 1 175 116 A2**
(43) Veröffentlichungstag der Anmeldung: **23.01.2002**
(21) Anmeldenummer: 01440148.3
(22) Anmeldetag: 30.05.2001
(51) Int. Cl.: H04Q 7/36

(54) **Verfahren zur Funkübertragung in einem zellular aufgebauten Mobilfunknetz mit einer hierarchischen Funkzellenstuktur**

(30) Priorität: 20.07.2000 DE 10035701
(71) Anmelder: ALCATEL, 75008 Paris (FR)
(72) Erfinder: Reemtsma, Jan-Hinnerk, Dr., 53173 Bonn (DE)
(74) Vertreter: Dreiss, Fuhlendorf, Steimle & Becker

(57) **Zusammenfassung**

Die Erfindung betrifft ein Verfahren zur Funkübertragung in einem zellular aufgebauten Mobilfunknetzwerk (1). Das Mobilfunknetzwerk (1) weist eine hierarchische Funkzellenstruktur mit kleinen Funkzellen (2) und mit mindetens einer die kleinen Funkzellen (2) überlagernden größeren Funkzelle (3) auf. Um in einem Mobilfunknetzwerk (1) mit einer hierarchischen Funkzellenstruktur eine Echtzeit-Funkübertragung, insbesondere eine Echtzeit-Datenübertragung, zu ermöglichen und die Übertragungsqualität zu verbessern, wird vorgeschlagen, eine Echtzeit-Funkübertragung über die mindestens eine überlagernde größere Funkzelle (3) auszuführen. Eine Nicht-Echtzeit-Datenübertragung wird vorzugsweise über eine kleinere Funkzelle (2) ausgeführt. Zur weiteren Verbesserung der Übertragungsqualität, insbesondere zur Verringerung von Interferenz-Störungen wird vorgeschlagen, die Datenübertragung bei einer Nicht-Echtzeit-Datenübertragung so lange zu unterbrechen, bis eine erfasste Interferenz-Störung unterhalb einer vorgebbaren Störschwelle liegt.

## Beschreibung

Die vorliegende Erfindung betrifft ein Verfahren zur Funkübertragung in einem zellular aufgebauten Mobilfunknetzwerk. Das Mobilfunknetzwerk weist eine hierarchische Funkzellenstruktur mit kleinen Funkzellen und mit mindestens einer die kleinen Funkzellen überlagernden größeren Funkzellen auf.

Die Erfindung betrifft außerdem ein zellular aufgebautes Mobilfunknetzwerk, das eine hierarchische Funkzellenstruktur aufweist. Die hierarchische Funkzellenstruktur umfasst kleine Funkzellen und mindestens eine die kleinen Funkzellen überlagernde größere Funkzellen.

Des weiteren betrifft die vorliegende Erfindung eine Vorrichtung zum Steuern eines Funkzellenclusters bestehend aus mehreren Funkzellen eines zellular aufgebauten Mobilfunknetzwerks. Das Mobilfunknetzwerk weist eine hierarchische Funkzellenstruktur mit kleinen Funkzellen und mit mindestens einer die kleinen Funkzellen überlagernden größeren Funkzellen auf.

Mobilfunknetzwerke mit Vorrichtungen zum Steuern eines Funkzellenclusters der eingangs genannten Art sind aus dem Stand der Technik bekannt. Ein Mobilfunknetzwerk kann in mehrere Ebenen unterteilt werden, wobei auf den einzelnen Ebenen verschiedene Komponenten des Mobilfunknetzwerks angeordnet sind.

Auf der untersten Ebene des Funknetzwerks sind Teilnehmer-Endgeräte (sog. User Equipment, UE) angeordnet, die bspw. als Mobilfunktelefone ausgebildet sind. In der darüber liegenden Ebene sind Basisstationen angeordnet. Das Mobilfunknetzwerk ist geographisch in eine Vielzahl von Funkzellen unterteilt. In jeder Funkzelle ist mindestens eine Basisstation angeordnet. In einem Mobilfunknetzwerk, das nach dem Universal Mobile Telecommunications System (UMTS)-Standard arbeitet, werden die Basisstationen als Node B bezeichnet. Die Basisstationen steuern den Aufbau einer Funkübertragungsverbindung zu den Endgeräten bzw. den Verbindungsabbau und koordinieren die Verbindung zu mehreren Endgeräten innerhalb einer Funkzelle. Die Funkübertragungsverbindung kann als eine permanente Verbindung zur Übermittlung von leitungsvermittelten Daten (sog. Circuit Switched Data) oder als eine virtuelle Verbindung zur Übermittlung von paketvermittelten Daten (sog. Packet Switched Data) ausgebildet sein. Die über die Funkübertragungsverbindung übertragenen Signale sind digitale Sprach- oder Datensignale. Nicht-Echtzeit Datensignale werden vorzugsweise paketvermittelt übertragen.

In der nächsthöheren Ebene sind Vorrichtungen zum Steuern eines Funkzellenclusters angeordnet. Eine solche Vorrichtung ist jeweils mehreren Basisstationen zugeordnet. Im UMTS-Standard wird eine solche Vorrichtung als Radio Network Controller (RNC) bezeichnet. Die Vorrichtung steuert bspw. die Funkresourcen (sog. Radio Resource Management) oder die Leistungsresourcen (Terrestrial Resource Management) eines Funkzellenclusters. Insbesondere ist die Vorrichtung verantwortlich für ein Weiterreichen einer Funkübertragungsverbindung von einer Funkzelle an eine andere Funkzelle (sog. Handover) oder im UMTS-Standard für eine Verbindung eines Endgeräts mit mindestens zwei Basisstationen (sog. Macro Diversity Mode).

In der höchsten Ebene befindet sich mindestens eine dem Festnetz (Core Network) zugeordnete Vermittlungseinrichtung, die den Vorrichtungen zum Steuern eines Funkzellenclusters übergeordnet ist. Eine Funkübertragungsverbindung von einem mobilen Endgerät zu einem Festnetz-Teilnehmer-Endgerät wird über diese Vermittlungseinrichtung hergestellt.

Die paketvermittelte Funkübertragung, bspw. über das Internet Protokoll (IP), gewinnt zunehmend an Bedeutung. Beispiele dafür sind der UMTS-Standard der dritten Generation oder Funkübertragungsverfahren nach dem sog. EDGE (Enhanced Data Rates for GSM Evolution) oder dem sog. GPRS (General Packet Radio Services). Der verstärkte Einsatz von paketvermittelten Datenübertragungen bedeutet eine Zunahme von Nicht-Echtzeitdiensten, deren Funkübertragung nicht sehr zeitkritisch ist. Jedoch bringen Echtzeit-Funkübertragungen große Probleme mit sich. Dies gilt insbesondere wenn ein Handover zwischen zwei Funkzellen ausgeführt werden soll. In herkömmlichen Mobilfunknetzwerken kann der Aufbau einer neuen Funkübertragungsverbindung mehr als eine Sekunde dauern. Ein Handover kann bis zu sieben Sekunden dauern, was für Echtzeit-Funkübertragungen um ein Vielfaches zu lang ist.

Aus dem Stand der Technik sind Mobilfunknetzwerke mit einer hierarchischen Funkzellenstruktur bekannt, die kleinere Funkzellen (sog. Micro Cells oder Pico Cells) und diese überlagernde größere Funkzellen (Overlay Cells) aufweisen.

Der vorliegenden Erfindung liegt die Aufgabe zugrunde, in einem Mobilfunknetzwerk mit einer hierarchischen Funkzellenstruktur eine Echtzeit-Funkübertragung, insbesondere eine Echtzeit-Funkübertragung, zu ermöglichen und die Übertragungsqualität zu verbessern.

Zur Lösung dieser Aufgabe schlägt die Erfindung ausgehend von dem Verfahren der eingangs genannten Art vor, dass eine Echtzeit-Funkübertragung über die mindestens eine überlagernde größere Funkzelle ausgeführt wird.

Durch eine Echtzeit-Funkübertragung, d. h. durch eine Funkübertragung von Echtzeitdiensten, über die größeren Funkzellen des Mobilfunknetzwerks kann bei einer Bewegung eines Mobilfunk-Teilnehmer auf einer bestimmten Bahn innerhalb des Mobilfunknetzwerks die Anzahl der notwendigen Handovers entscheidend reduziert werden. Das führt zu einer deutlich verbesserten Übertragungsqualität für Echtzeitdienste wie z. B. für Sprachdienste oder auch für paketvermittelte Datendienste. Mit dem erfindungsgemäßen Verfahren können Voice over IP und andere Echtzeit-Anwendungen in Mobilfunknetzwerken realisiert werden. Weitere Vorteile der vorliegenden Erfindung liegen in der einfachen Realisierung des Verfahrens und der Tatsache, dass zur Realisierung keinerlei Änderungen in der Mobilfunknetzwerk-Ebene mit den Basisstationen vorgenommen werden müssen.

Gemäß einer vorteilhaften Weiterbildung der vorliegenden Erfindung wird vorgeschlagen, dass eine Nicht-Echtzeit-Datenübertragung über eine kleinere Funkzelle ausgeführt wird. Über Nicht-Echtzeit-Datenübertragungsverbindungen können bspw. Kurznachrichten (z. B. Short Message Service, SMS) oder Dateien o. ä. übertragen oder kann bspw. mittels des Whireless Application Protokoll (WAP) auf das Internet zugegriffen werden.

Gemäß einer bevorzugten Ausführungsform der vorliegenden Erfindung wird vorgeschlagen, dass eine Funkübertragungsverbindung über diejenige Funkzelle aufgebaut (sog. Call Setup) oder eine Funkübertragungsverbindung von einer Funkzelle an eine in Abhängigkeit davon ausgewählte Funkzelle weitergereicht wird (Handover), ob die Funkübertragung in Echtzeit erfolgen soll oder nicht. Nach dem Stand der Technik erfolgt bei einem Call Setup oder bei einem Handover die Auswahl einer geeigneten Funkzelle für die Funkübertragungsverbindung hauptsächlich nach Kriterien wie der Auslastung der Funkzellen oder der erforderlichen Übertragungsleistung. Erfindungsgemäß kommt als ein weiteres Kriterium zur Auswahl einer geeigneten Funkzelle die Art der Funkübertragungsverbindung, nämlich ob die Funkübertragung in Echtzeit erfolgen soll oder nicht, hinzu.

Gemäß einer anderen vorteilhaften Weiterbildung der vorliegenden Erfindung wird vorgeschlagen, dass die Funkübertragung bei einer Nicht-Echtzeit-Funkübertragung, wie z. B. GPRS, so lange unterbrochen wird, bis eine gemessene Interferenz-Störung unterhalb einer vorgebbaren Störschwelle liegt. In einem Mobilfunknetzwerk kann es vorkommen, dass ein Teilnehmer-Endgerät eines oder mehrere andere Endgeräte in der gleichen oder in benachbarten Funkzellen stört. Das kann bspw. dann vorkommen, wenn das störende Endgerät mit einer hohen Übertragungsleistung sendet oder eine Basisstation auffordert, ihrerseits mit einer hohen Übertragungsleistung zu senden. Mit dem gemäß der Weiterbildung vorgeschlagenen Verfahren können diese Art von Interferenz-Störungen bei einer Nicht-Echtzeit-Datenübertragung, wie z. B. GPRS oder EDGE, minimiert werden. Das in dieser Weiterbildung vorgeschlagene Verfahren wird insbesondere bei Nicht-Echtzeit-Datenübertragungen angewandt. Es ist jedoch auch denkbar, dieses Verfahren bei Echtzeit-Funkübertragungen (z. B. GERAN, GSM EDGE Radio Access Network, einer verbesserten EDGE-Übertragung) mit einer hohen mittleren Übertragungsleistung anzuwenden, bspw. bei Teilnehmer-Endgeräten, die weit von einer Basisstation entfernt sind oder sich in einem Funkloch befinden. Das vorgeschlagene Verfahren ist insbesondere für Mobilfunknetzwerke geeignet, die Daten nach dem Code Division Multiple Access (CDMA)-Verfahren übertragen, wie bspw. UMTS, da es dort bei einer Funkübertragung mit einer hohen Leistung zu Interferenz-Störungen der Endgeräte untereinander kommen kann.
Das beschriebene Verfahren ist besonders vorteilhaft als Weiterbildung des erfindungsgemäßen Verfahrens, bei dem eine Echtzeit-Funkübertragung über die großen Funkzellen eines zellular aufgebauten Mobilfunknetzwerks mit einer hierarchischen Funkzellenstruktur erfolgt. Das Verfahren gemäß dieser Weiterbildung hat die beschriebenen Vorteile - Verringerung von wechselseitigen Interferenz-Störungen der Endgeräte - auch bei Mobilfunknetzwerken, bei denen die Funkübertragung nicht paketvermittelt und bei denen eine Echtzeit-Funkübertragung nicht ausschließlich über die großen Funkzellen erfolgt.

Gemäß einer weiteren bevorzugten Ausführungsform der vorliegenden Erfindung wird vorgeschlagen, dass das Verfahren in einer Medium Access Control (MAC)-Schicht einer Vorrichtung zum Steuern eines Funkzellenclusters realisiert wird, wobei für die nicht in Echtzeit zu übertragenden Daten die Störung erfasst und die Datenübertragung unterbrochen wird, falls die Störung die vorgebbare Störschwelle überschreitet. Das vorgeschlagene Verfahren wird also durch eine Änderung in der sog. Medium Access Control (MAC)-Schicht einer Vorrichtung zum Steuern eines Funkzellenclusters (z. B. RNC bei UMTS) realisiert. Sobald die MAC-Schicht ein Datenpaket zur Übertragung empfängt, überprüft die MAC-Schicht den Zustand einer Interferenz-Störung. Falls der Zustand "kritisch" ist, wird die Datenübertragung unterbrochen.

Vorteilhafterweise wird die Interferenz-Störung von Zeit zu Zeit erfasst und die Datenübertragung wieder aufgenommen, falls die Störung die vorgebbare Störschwelle unterschreitet. Die Datenübertragung wird also wieder aufgenommen, sobald der Zustand der Interferenz-Störung auf "nicht-kritisch" übergeht.

Vorzugsweise wird die Datenübertragung nur bei denjenigen Nicht-Echtzeit-Datenübertragungen unterbrochen, deren mittlere Übertragungsleistung oberhalb einer vorgebbaren Leistungsschwelle liegt. Da eine Interferenz-Störung auch andere Ursachen als die Datenübertragung mit einer hohen Übertragungsleistung haben kann und das erfindungsgemäße Verfahren hauptsächlich bei derart verursachten Störungen Abhilfe schafft, wird durch diese Ausbildung der Erfindung eine unnötige Unterbrechung der Datenübertragung vermieden.

Als eine weitere Lösung der Aufgabe der vorliegenden Erfindung wird ausgehend von dem zellular aufgebauten Mobilfunknetzwerk der eingangs genannten Art vorgeschlagen, dass das Mobilfunknetzwerk Mittel zur Auswahl einer Funkzelle zum Aufbau einer Funkübertragungsverbindung (Call Setup) oder zum Weiterreichen einer Funkübertragungsverbindung von einer anderen Funkzelle (Handover) aufweist. Die Auswahl erfolgt in Abhängigkeit davon, ob die Funkübertragung in Echtzeit oder nicht erfolgen soll.

Gemäß einer vorteilhaften Weiterbildung der vorliegenden Erfindung wird vorgeschlagen, dass die Mittel zur Auswahl einer Funkzelle für eine Echtzeit-Funkübertragung eine größere Funkzelle auswählen.

Des weiteren wird vorgeschlagen, dass die Mittel zur Auswahl einer Funkzelle für eine Nicht-Echtzeit-Datenübertragung eine kleinere Funkzelle auswählen.

Gemäß einer bevorzugten Ausführungsform der vorliegenden Erfindung wird vorgeschlagen, dass das Mobilfunknetzwerk Mittel zur Ausführung eines erfindungsgemäßen Verfahrens aufweist.

Als noch eine weitere Lösung der Aufgabe der vorliegenden Erfindung wird ausgehend von einer Vorrichtung zum Steuern eines Funkzellenclusters bestehend aus mehreren Funkzellen eines zellular aufgebauten Mobilfunknetzwerks der eingangs genannten Art vorgeschlagen, dass die Vorrichtung Mittel zur Auswahl einer Funkzelle zum Aufbau einer Funkübertragungsverbindung (Call Setup) oder zum Weiterreichen einer Funkübertragungsverbindung von einer anderen Funkzelle (Handover) in Abhängigkeit davon aufweist, ob die Funkübertragung in Echtzeit oder nicht erfolgen soll.

Gemäß einer vorteilhaften Weiterbildung der vorliegenden Erfindung wird vorgeschlagen, dass die Mittel zur Auswahl einer Funkzelle für eine Echtzeit-Funkübertragung eine größere Funkzelle auswählen. Des weiteren wird vorgeschlagen, dass die Mittel zur Auswahl einer Funkzelle für eine Nicht-Echtzeit-Datenübertragung eine kleinere Funkzelle auswählen.

Als eine bevorzugte Ausführungsform der vorliegenden Erfindung wird vorgeschlagen, dass das Mobilfunknetzwerk Mittel zur Ausführung des erfindungsgemäßen Verfahrens aufweist.

Von besonderer Bedeutung ist die Realisierung des erfindungsgemäßen Verfahrens in der Form eines Speicherelements, das für eine Vorrichtung zum Steuern eines Funkzellenclusters bestehend aus mehreren Funkzellen eines zellular aufgebauten Mobilfunknetzwerks vorgesehen ist. Dabei ist auf dem Speicherelement ein Programm abgespeichert ist, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Programm realisiert, so dass dieses mit dem Programm versehene Speicherelement in gleicher Weise die Erfindung darstellt wie das Verfahren, zu dessen Ausführung das Programm geeignet ist. Als Speicherelement kann insbesondere ein elektrisches Speichermedium zur Anwendung kommen, bspw. ein Read-Only-Memory, ein Random-Access-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Fig. 1: eine schematische Abbildung eines erfindungsgemäßen zellular aufgebauten Mobilfunknetzwerks gemäß einer bevorzugten Ausführungsform; und
- Fig. 2: eine weitere schematische Abbildung des Mobilfunknetzwerks aus Fig. 1;
- Fig. 3: ein Ablaufdiagramm eines erfindungsgemäßen Verfahrens gemäß einer bevorzugten Ausführungsform;
- Fig. 4: eine erfindungsgemäße Vorrichtung zum Steuern eines Funkzellenclusters eines zellular aufgebauten Mobilfunknetzwerks; und
- Fig. 5: ein Ablaufdiagramm einer Weiterbildung des erfindungsgemäßen Verfahrens zur Verringerung von Interferenz-Störungen.

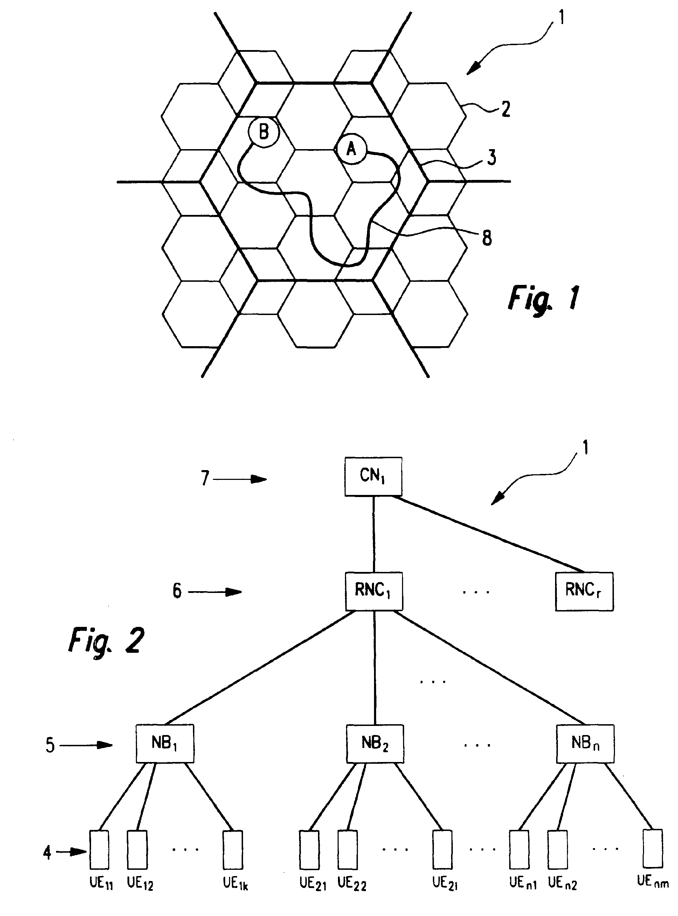

In Fig. 1 ist ein erfindungsgemäßes zellular aufgebautes Mobilfunknetzwerk 1 in Form eines Universal Mobile Telecommunications System (UMTS)-Mobilfunknetzwerks in seiner Gesamtheit mit dem Bezugszeichen 1 bezeichnet. Das Mobilfunknetzwerk 1 weist eine hierarchische Funkzellenstruktur auf, die kleinere Funkzellen 2 (sog. Micro Cells oder Pico Cells) und diese überlagernde größere Funkzellen 3 (Overlay Cells) umfasst.

Das Mobilfunknetzwerk 1 ist in mehrere Ebenen unterteilt (vgl. Fig. 2), wobei auf den einzelnen Ebenen verschiedene Komponenten des Mobilfunknetzwerks 1 angeordnet sind. Auf der untersten Ebene des Funknetzwerks sind Teilnehmer-Endgeräte 4 (sog. User Equipment, UE) angeordnet, die bspw. als Mobilfunktelefone ausgebildet sind. In der darüber liegenden Ebene sind Basisstationen 5 angeordnet. Das Mobilfunknetzwerk 1 ist geographisch in eine Vielzahl von Funkzellen 2, 3 unterteilt. In jeder Funkzelle 2, 3 ist mindestens eine Basisstation 5 angeordnet. Im UMTS-Standard werden die Basisstationen 5 auch als Node B (NB) bezeichnet. Die Basisstationen 5 steuern den Aufbau einer Funkübertragungsverbindung zu den Endgeräten 4 bzw. den Verbindungsabbau und koordinieren die Verbindung zu mehreren Endgeräten 4 innerhalb einer Funkzelle 2, 3. Die Funkübertragungsverbindung dient bspw. zum Fernsprechen oder auch zur Übermittlung von paketvermittelten Daten (sog. Packet Switched Data). Die paketvermittelte Datenübertragung erfolgt bspw. nach dem Internet Protokoll (IP). Eine paketvermittelte Datenübertragung wird bspw. nach UMTS-Standard der dritten Generation oder nach Verfahren wie EDGE (Enhanced Data Rates for GSM Evolution) oder GPRS (General Packet Radio Services) ausgeführt.

In der nächsthöheren Ebene sind Vorrichtungen 6 zum Steuern eines Funkzellenclusters angeordnet. Im UMTS-Standard werden die Vorrichtungen 6 auch als Radio Network Controller (RNC) bezeichnet. Eine solche Vorrichtung 6 ist jeweils mehreren Basisstationen 5 zugeordnet. Die Abmessungen der Funkzellencluster können den großen Funkzellen 3 entsprechend ausgebildet sein, oder aber von deren Abmessungen abweichen. Die Vorrichtung 6 steuert bspw. die Funkresourcen (sog. Radio Resource Management) oder die Leitungsresourcen (Terrestrial Resource Management) eines Funkzellenclusters. Insbesondere ist die Vorrichtung 6 verantwortlich für ein Weiterreichen einer Funkübertragungsverbindung von einer Funkzelle 2, 3 an eine andere Funkzelle 2, 3 (sog. Handover) oder im UMTS-Standard für eine Verbindung eines Endgeräts 4 mit mindestens zwei Basisstationen 5 (sog. Macro Diversity Mode).

In der höchsten Ebene ist mindestens eine dem Festnetz (sog. Core Network) zugeordnete Vermittlungseinrichtung 7 angeordnet, die den Vorrichtungen 6 zum Steuern eines Funkzellenclusters übergeordnet ist. Eine Funkübertragungsverbindung von einem Endgerät 4 zu einem Festnetz-Teilnehmer-Endgerät wird über die Vermittlungseinrichtung 7 hergestellt.

Die Funkübertragung für Echtzeitdienste, insbesondere die paketvermittelte Datenübertragung, verursacht zunehmend Probleme. Dies gilt insbesondere wenn ein Handover zwischen zwei Funkzellen 2, 3 ausgeführt werden soll. Bei GPRS kann der Aufbau einer neuen Funkübertragungsverbindung mehr als eine Sekunde dauern. Ein Handover kann bis zu sieben Sekunden dauern, was für Echtzeit-Funkübertragungen um ein Vielfaches zu lang ist.

Erfindungsgemäß wird deshalb vorgeschlagen, die Echtzeit-Funkübertragungen über eine größere Funkzelle 3 auszuführen, um so die Anzahl der notwendigen Handovers zu reduzieren. Außerdem führt die Erfindung zu einer Reduktion der Unterbrechungen bei Echtzeitdiensten (Service Interrupts). In dem Beispiel aus Fig. 1 müssten bei einer Funkübertragungsverbindung zu einem Teilnehmer-Endgerät 4 über die kleinen Funkzellen 2 auf einem Weg 8 von A nach B sechs Handovers ausgeführt werden. Bei einer Funkübertragungsverbindung über die große Funkzelle 3 muss dagegen kein einziger Handover ausgeführt werden, was zu einer deutlichen Verbesserung der Qualität der Funkverbindung führt. Außerdem können Echtzeit-Anforderungen an die Funkübertragungsverbindung wesentlich zuverlässiger erfüllt werden. Aus diesem Grund eignet sich das erfindungsgemäße Verfahren besonders gut für Voice over IP oder andere Echtzeit-Anwendungen in Mobilfunknetzwerken.

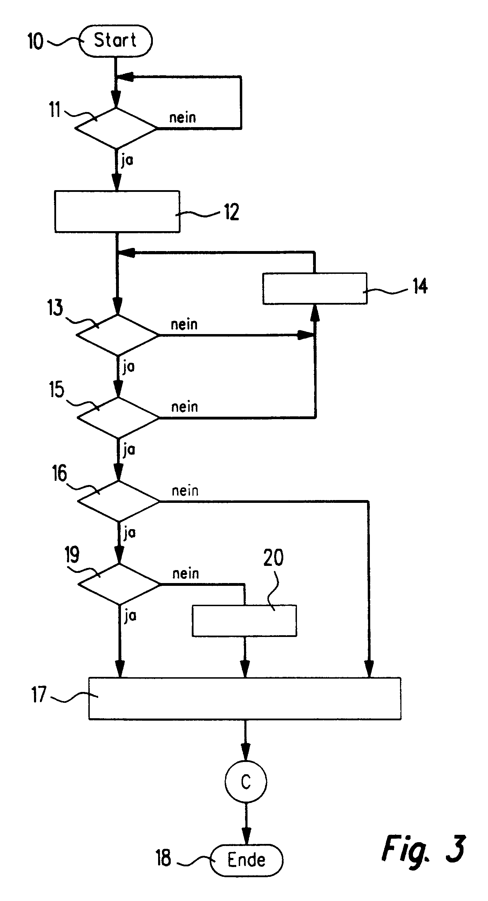

Das erfindungsgemäße Verfahren wird im Folgenden anhand der Fig. 3 näher erläutert. Es beginnt in einem Funktionsblock 10. Das Teilnehmer-Endgerät 4 befindet sich entweder in einem ausgeschalteten Zustand oder in einem gesprächsaktiven Zustand. Anschließend wird in einem Abfrageblock 11 überprüft, ob eine Funkübertragungsverbindung zu einer Funkzelle 2 aufgebaut werden soll. Das ist bspw. bei ausgeschaltetem Endgerät 4 zum Aufbau einer Funkübertragungsverbindung (Call Setup) zu der Funkzelle 2 oder bei gesprächsaktivem Endgerät 4 zum Weiterreichen der aktiven Funkübertragungsverbindung von einer anderen Funkzelle 2 an die Funkzelle 2 der Fall. Soll keine Funkübertragungsverbindung zu der Funkzelle 2 aufgebaut werden, wird wieder in den Ausgangszustand (ausgeschaltetes oder gesprächsaktives Endgerät 4) verzweigt.

Falls jedoch eine Funkübertragungsverbindung zu der Funkzelle 2, 3 aufgebaut werden soll, wird in einem Funktionsblock 12 diejenige Funkzelle 2, 3 ausgewählt, zu der eine Funkübertragungsverbindung aufgebaut werden soll. Das ist vorzugsweise bei ausgeschaltetem Endgerät 4 eine der Funkzellen 2, 3, in denen das Endgerät 4 lokalisiert ist und bei gesprächsaktivem Endgerät 4 eine der Funkzellen 2, 3, in die sich das Endgerät 4 hineinbewegt. Anschließend wird in einem Abfrageblock 13 überprüft, ob in der ausgewählten Funkzelle 2, 3 die erforderliche Übertragungsleistung erzielt werden kann. Falls nicht, wird in einem Funktionsblock 14 eine andere Funkzelle 2, 3 ausgewählt.

Falls die erforderliche Übertragungsleistung in der ausgewählten Funkzelle 2, 3 jedoch erzielt werden kann, wird in einem Abfrageblock 15 überprüft, ob die ausgewählte Funkzelle 2, 3 eine geringe Auslastung hat, d. h. ob die Auslastung eine vorgebbare Auslastungsschwelle nicht überschreitet. Ist das nicht der Fall, d. h. die ausgewählte Funkzelle 2, 3 ist überlastet, wird wiederum zu dem Funktionsblock 14 verzweigt und eine andere Funkzelle 2, 3 ausgewählt. Die Auswahl der Funkzelle 2, 3 nach den Kriterien erreichbarer Übertragungsleistung und Auslastung ist an sich aus dem Stand der Technik bekannt.

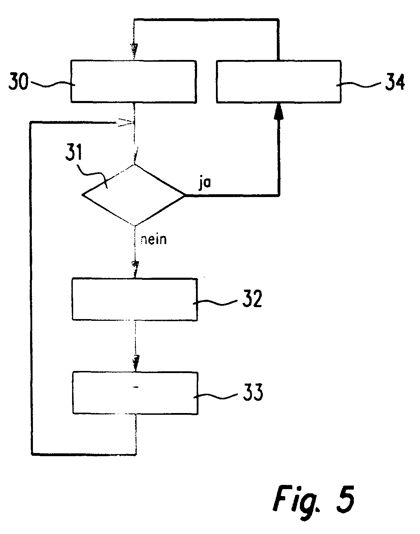

Als weiteres Kriterium zur Auswahl der Funkzelle 2, 3 kommt erfindungsgemäß eine weitere Abfrage aus Abfrageblock 16 hinzu, ob nämlich die Funkübertragung in Echtzeit erfolgen soll. Falls nein, wird zu Funktionsblock 17 verzweigt, in dem eine Übertragungsverbindung zu der ausgewählten Funkzelle 2 aufgebaut wird. In Funktionsblock 18 ist das erfindungsgemäße Verfahren beendet. Vor Beendigung des erfindungsgemäßen Verfahrens kann an der Stelle C auch ein in Fig. 5 dargestelltes Verfahren zur Verringerung von Interferenz-Störungen ausgeführt werden.

Falls jedoch eine Echtzeit-Funkübertragung gefordert wird, wird in Abfrageblock 19 überprüft, ob eine große Funkzelle 3 des Mobilfunknetzwerkes 1 ausgewählt wurde. Falls ja, kann unmittelbar zu dem Funktionsblock 18 verzweigt und die Funkübertragungsverbindung zu der ausgewählten Funkzelle 3 aufgebaut werden. Falls jedoch eine kleine Funkzelle 2 ausgewählt wurde, wird in einem Funktionsblock 20 eine die kleine Funkzelle 2 überlagernde große Funkzelle 3 ausgewählt. Erst danach wird zu dem Funktionsblock 18 verzweigt und die Funkübertragungsverbindung zu der ausgewählten Funkzelle 3 aufgebaut.

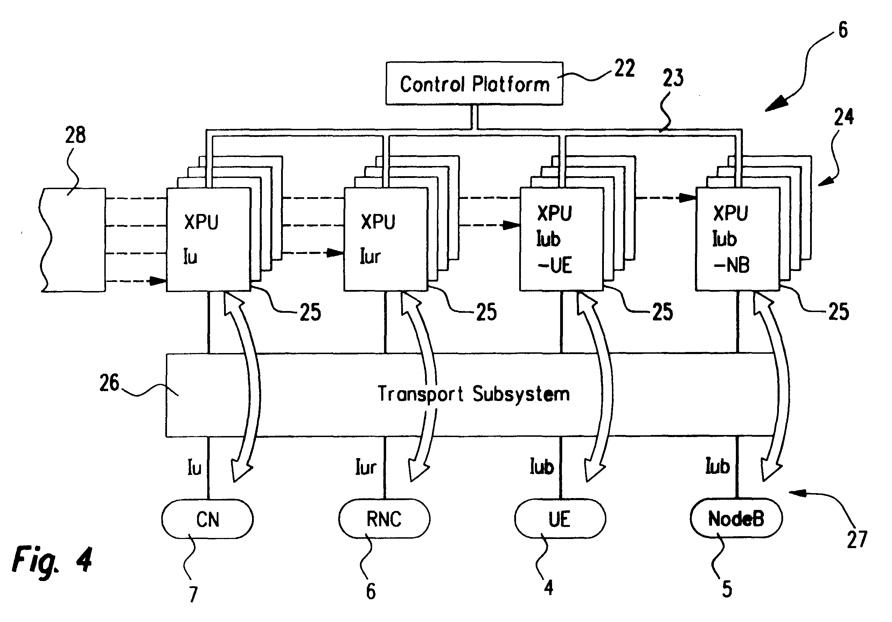

Eine in Fig. 4 dargestellte erfindungsgemäße Vorrichtung 6 wird auch als RNC (Radio Network Controller) bezeichnet. Die Vorrichtung 6 steuert ein Funkzellencluster bestehend aus mehreren Funkzellen des Universal Mobile Telecommunications System (UMTS)-Funknetzwerks 1 (vgl. Fig. 1). Die Vorrichtung 6 ist in mehrere Ebenen unterteilt. Die oberste Ebene wird als Control Platform 22 bezeichnet und umfasst einen OAM (Operation and Maintenance)-Server und einen Telecom Server (beide nicht dargestellt). Die Control Platform 22 steht bspw. über eine Ethernet-Verbindung 23 mit einer darunterliegenden Ebene unmittelbar in Verbindung.

Die darunterliegende Ebene wird als Aux Subsystem 24 bezeichnet und umfasst mehrere Prozessoren 25 XPU. Jeweils vier Prozessoren 25 sind zu einer Prozessorgruppe XPU Iu, XPU Iur, XPU Iub-UE und XPU Iub-NB zusammengefasst. Die darunterliegende Ebene wird als Transport Subsystem 26 bezeichnet und umfasst mindestens ein Schaltelement (nicht dargestellt). Das Schaltelement ist als ein Internet Protokoll (IP)-Rooter oder als ein Multi-Path Self-Routing (MPSR)-Switch ausgebildet.

Von dem Schaltelement zweigen mehrere Schnittstellen 27 Iu, Iur, Iub-UE, Iub-NB zu verschiedenen Komponenten des Funknetzwerks 1 ab. Die Komponenten des Funknetzwerks 1 umfassen mindestens ein Teilnehmer-Endgerät 4, mindestens eine Basisstation 5, mindestens eine weitere Vorrichtung 6 zum Steuern eines weiteren Funkzellenclusters und mindestens eine Vermittlungseinrichtung 7. Über das Schaltelement in dem Transport Subsystem 26 sind die Schnittstellen 27 Iu, Iur, Iub-UE und Iub-NB mit den Prozessoren 25 XPU verschaltet.

Die Vorrichtung 6 weist außerdem mindestens ein Speicherelement 28 auf, auf dem ein Programm abgespeichert ist, das auf den Mikroprozessoren 25 ablauffähig ist. Das Programm ist zur Ausführung des erfindungsgemäßen Verfahrens geeignet. Als Speicherelement 28 kann insbesondere ein elektrisches Speichermedium zur Anwendung kommen, bspw. ein Read-Only-Memory, ein Random-Access-Memory oder ein Flash-Memory.

In Mobilfunknetzwerken 1 kann die Übertragungsleistung für die Funkübertragung zwischen einem Endgerät 4 und einer Basisstation 5 variiert werden, um eine bestimmte Übertragungsqualität (z. B. "bit error rate" oder "frame error rate") erzielen zu können. Wenn ein Teilnehmer-Endgerät 4 mit einer hohen Übertragungsleistung sendet oder eine Basisstation 5 auffordert, ihrerseits mit einer hohen Übertragungsleistung zu senden, kann es vorkommen, dass das Endgerät 4 eines oder mehrere andere Endgeräte 4 in der gleichen Funkzelle 2, 3 oder in benachbarten Funkzellen 2, 3 stört. Diese Art von Interferenz-Störungen können mit dem in Fig. 5 dargestellten Verfahren minimiert werden. Das Verfahren kann an der Stelle C als Teil des in Fig. 3 dargestellten erfindungsgemäßen Verfahrens ausgeführt werden. Bei dem Verfahren aus Fig. 5 wird die Funkübertragung so lange unterbrochen, bis eine gemessene Interferenz-Störung unterhalb einer vorgebbaren Störschwelle liegt. Das Verfahren wird insbesondere bei Nicht-Echtzeit-Datenübertragungen angewandt. Es ist jedoch auch denkbar, dieses Verfahren bei Echtzeit-Funkübertragungen mit einer hohen mittleren Übertragungsleistung anzuwenden, bspw. bei Teilnehmer-Endgeräten 4, die weit von einer Basisstation 5 entfernt sind oder sich in einem Funkloch befinden. Das Verfahren aus Fig. 5 ist insbesondere für Mobilfunknetzwerke 1 geeignet, die Daten nach dem Code Division Multiple Access (CDMA)-Verfahren übertragen, wie bspw. UMTS, da es dort bei einer Funkübertragung mit einer hohen Leistung zu Interferenz-Störungen der Endgeräte 4 untereinander kommen kann.

Das Verfahren aus Fig. 5 wird in einer Medium Access Control (MAC)-Schicht der Vorrichtung 6 zum Steuern eines Funkzellenclusters realisiert. Sobald die MAC-Schicht in Funktionsblock 30 ein Datenpaket zur Übertragung empfängt, überprüft die MAC-Schicht in einem Abfrageblock 31 den Zustand einer Interferenz-Störung. Falls der Zustand "kritisch" ist, d. h. die Interferenz-Störung die vorgegebene Störschwelle übersteigt, wird die Datenübertragung in Funktionsblock 32 unterbrochen.

Anschließend wird in einem Funktionsblock 33 eine vorgebbare Zeit T gewartet, um dann zu dem Abfrageblock 31 zu verzweigen und den Zustand der Interferenz-Störung erneut zu überprüfen. Falls der Zustand der Interferenz-Störung "nicht-kritisch" ist, d. h. die Interferenz-Störung unterhalb der vorgegebenen Störschwelle liegt, wird das in Funktionsblock 30 empfangene Datenpaket in Funktionsblock 34 gesendet. Danach wird wieder zu dem Funktionsblock 30 zum Empfang eines weiteren Datenpakets verzweigt.

Die Interferenz-Störung wird also von Zeit zu Zeit erfasst und die Datenübertragung wieder aufgenommen, falls die Störung die vorgebbare Störschwelle unterschreitet. Die Datenübertragung wird wieder aufgenommen, sobald der Zustand der Interferenz-Störung auf "nicht-kritisch" übergeht.

## Patentansprüche

1. Verfahren zur Funkübertragung in einem zellular aufgebauten Mobilfunknetzwerk (1), das eine hierarchische Funkzellenstruktur mit kleinen Funkzellen (2) und mit mindestens einer die kleinen Funkzellen (2) überlagernden größeren Funkzellen (3) aufweist, **dadurch gekennzeichnet, dass** eine Echtzeit-Funkübertragung über die mindestens eine überlagernde größere Funkzelle (3) ausgeführt wird.

2. Verfahren nach Anspruch 1, **dadurch gekennzeichnet, dass** eine Nicht-Echtzeit-Funkübertragung über die kleineren Funkzellen (2) ausgeführt wird.

3. Verfahren nach Anspruch 1 oder 2, **dadurch gekennzeichnet, dass** eine Funkübertragungsverbindung über diejenige Funkzelle (2, 3) aufgebaut oder eine Funkübertragungsverbindung von einer Funkzelle (2, 3) an eine ausgewählte Funkzelle (2, 3) übergeben wird in Abhängigkeit davon, ob die Funkübertragung in Echtzeit erfolgen soll oder nicht.

4. Verfahren nach einem der Ansprüche 1 bis 3, **dadurch gekennzeichnet, dass** die Funkübertragung bei einer Nicht-Echtzeit-Datenübertragung so lange unterbrochen wird, bis eine erfasste Interferenz-Störung unterhalb einer vorgebbaren Störschwelle liegt.

5. Verfahren nach Anspruch 4, **dadurch gekennzeichnet, dass** das Verfahren in einer Medium Access Control (MAC)-Schicht einer Vorrichtung zum Steuern eines Funkzellenclusters realisiert wird, wobei für die nicht in Echtzeit zu übertragenden Daten die Interferenz-Störung erfasst und die Datenübertragung unterbrochen wird, falls die Interferenz-Störung die vorgebbare Störschwelle überschreitet.

6. Verfahren nach Anspruch 5, **dadurch gekennzeichnet, dass** die Störung von Zeit zu Zeit erfasst wird und die Datenübertragung wieder aufgenommen wird, falls die Interferenz-Störung die vorgebbare Störschwelle unterschreitet.

7. Verfahren nach einem der Ansprüche 4 bis 6, **dadurch gekennzeichnet, dass** die Datenübertragung nur bei denjenigen Nicht-Echtzeit-Datenübertragungen unterbrochen wird, deren mittlere Übertragungsleistung oberhalb einer vorgebbaren Leistungsschwelle liegt.

8. Zellular aufgebautes Mobilfunknetzwerk (1), das eine hierarchische Funkzellenstruktur mit kleinen Funkzellen (2) und mindestens einer die kleinen Funkzellen (2) überlagernden größeren Funkzelle (3) aufweist, **dadurch gekennzeichnet, dass** das Mobilfunknetzwerk (1) Mittel (6) zur Auswahl einer Funkzelle (2, 3) zum Aufbau einer Funkübertragungsverbindung oder zum Weiterreichen einer Funkübertragungsverbindung von einer anderen Funkzelle (2, 3) in Abhängigkeit davon aufweist, ob die Funkübertragung in Echtzeit oder nicht erfolgen soll.

9. Mobilfunknetzwerk nach Anspruch 8, **dadurch gekennzeichnet, dass** die Mittel zur Auswahl einer Funkzelle für eine Echtzeit-Funkübertragung eine größere Funkzelle auswählen.

10. Mobilfunknetzwerk nach Anspruch 8 oder 9, **dadurch gekennzeichnet, dass** die Mittel zur Auswahl einer Funkzelle für eine Nicht-Echtzeit-Funkübertragung eine kleinere Funkzelle auswählen.

11. Vorrichtung (6) zum Steuern eines Funkzellenclusters bestehend aus mehreren Funkzellen (2, 3) eines zellular aufgebauten Mobilfunknetzwerks (1), das eine hierarchische Funkzellenstruktur mit kleinen Funkzellen (2) und mit mindestens einer die kleinen Funkzellen (2) überlagernden größeren Funkzellen (3) aufweist, **dadurch gekennzeichnet, dass** die Vorrichtung (6) Mittel zur Auswahl einer Funkzelle (2, 3) zum Aufbau einer Funkübertragungsverbindung oder zum Weiterreichen einer Funkübertragungsverbindung von einer anderen Funkzelle (2, 3) in Abhängigkeit davon aufweist, ob die Funkübertragung in Echtzeit oder nicht erfolgen soll.

12. Vorrichtung (6) nach Anspruch 11, **dadurch gekennzeichnet, dass** die Mittel zur Auswahl einer Funkzelle (2, 3) für eine Echtzeit-Funkübertragung eine größere Funkzelle (3) auswählen.

13. Vorrichtung (6) nach Anspruch 11 oder 12, **dadurch gekennzeichnet, dass** die Mittel zur Auswahl einer Funkzelle (2, 3) für eine Nicht-Echtzeit-Funkübertragung eine kleinere Funkzelle (2) auswählen.
